# EUROPÄISCHE PATENTANMELDUNG

(11) **EP 4 552 773 A2**
(43) Veröffentlichungstag der Anmeldung: **14.05.2025**
(21) Anmeldenummer: 24193755.6
(22) Anmeldetag: 09.08.2024
(51) Int. Cl.: B23B 49/00

(54) **VORRICHTUNG ZUR BEGRENZUNG DER EINGRIFFSTIEFE EINES BOHRERS**

(30) Priorität: 23.08.2023 DE 102023122578
(71) Anmelder: Wolfcraft GmbH, 56746 Kempenich (DE)
(72) Erfinder: Ebert, Winfried, 56745 Weibern (DE)
(74) Vertreter: Grundmann, Dirk

(57) **Zusammenfassung**

Die Erfindung betrifft eine Vorrichtung zur Begrenzung der Eingriffstiefe eines Bohrers in ein Werkstück, mit einem Grundkörper (3), der mittels Klemmmitteln (2, 5) an einem Schaft (1") des Bohrers (1) in verschiedenen Abständen zu einer Spitze (1') des Bohrers (1) befestigbar ist und mit einem Anschlagelement (4), das mit einem in eine Ringnut (13) des Grundkörpers (3) eingreifenden Befestigungsring (7) drehbar und lösbar am Grundkörper (3) befestigt ist und eine Anschlagfläche (6') aufweist zum Anschlagen an das Werkstück. Der Innendurchmesser des Befestigungsrings (7) ist derart größer als der Außendurchmesser der Ringnut (13), dass das Anschlagelement (4) mit radialem Bewegungsspiel gegenüber dem Grundkörper (3) drehbar ist und der Befestigungsring (7) eine Trennstelle (T) aufweist, an der sich zwei Enden (9,10) des Befestigungsrings (7) in Umfangsrichtung gegenüberliegen und an der der Querschnitt des Befestigungsring (7) vermindert ist. Ferner ist vorgesehen, dass das Anschlagelement (4) durch Lösen vom Grundkörper (3) und Wenden um 180° in eine Parkstellung bringbar ist.

## Beschreibung

### Gebiet der Technik

Die Erfindung betrifft eine Vorrichtung mit einem Grundkörper, der mittels Klemmmitteln an einem Schaft des Bohrers in verschiedenen Abständen zu einer Spitze des Bohrers befestigbar ist, um mit einer Anschlagfläche eines Anschlagelementes beim Eindringen des Bohrers in das Werkstück an die Oberfläche des Werkstücks anzuschlagen, um somit die Tiefe der Bohrung zu begrenzen, sowie ein Verfahren zur Fertigung einer derartigen Vorrichtung.

### Stand der Technik

Die DE 10 2008 022 968 A1 beschreibt einen Senker. Der Senker besitzt einen Schaft, der ein Außengewinde aufweist, auf dem ein Grundkörper aufgeschraubt ist. Der Grundkörper kann mit einer Madenschraube am Schaft fixiert werden. Der Grundkörper trägt einen drehbaren Anschlagring, der eine Anschlagfläche ausbildet, die beim Erreichen einer maximalen Eindringtiefe an die Oberfläche eines Werkstücks anschlagen kann.

Die DE 20 2022101 626 U1 beschreibt einen Tiefenstopp. Ein Grundkörper besitzt eine Höhlung, die zwei sich gegenüberliegende Öffnungen aufweist. In der Höhlung steckt ein Klemmkörper, der Spannflächen aufweist, die durch einen axialen Druck gegen eine Konusfläche der Höhlung gedrückt werden können. Der Klemmkörper besitzt eine Durchgangsöffnung, durch die sich der Schaft eines Bohrers erstrecken kann. Mit einem Spannelement kann auf den Klemmkörper eine axiale Kraft aufgebracht werden, die eine Klemmhalterung des Bohrers in der Vorrichtung bewirkt. Der Tiefenstopp besitzt eine Anschlagfläche, die gegen die Oberfläche des Werkstücks treten kann.

Die DE 1 090 919 beschreibt eine Spannvorrichtung zum Einspannen zylindrischer Werkstücke, bei der ein Spannring radial abragende Flügel mit Spannflächen aufweist, die mit einer Hohlkegelfläche zusammen wirken. Der Spannring besitzt einen radialen Schlitz und kann von einem Spannelement in einer axialen Richtung beaufschlagt werden.

Ein durchmesservariabler Spannring ist auch aus der EP 3 088 109 B1 vorbekannt.

Die DE 29 16 947 A1 beschreibt eine Ansenkvorrichtung mit einer Sackbohrung, in die der Schaft eines Bohrers eingesteckt werden kann, wobei ein Druckring eine Konusfläche mit sich gegenüberliegenden ebenen Flächen aufweist, an denen ein Schraubenschlüssel angesetzt werden kann.

Aus der CN 203209731 U1 ist ein Spannmechanismus mit einem Spannkegel vorbekannt, der entgegen Spannrichtung von einer Druckfeder beaufschlagt wird.

Zum Stand der Technik gehören ferner die GB 558,733 A, US 1,479,325 A und die EP 3 006 143 A1.

### Zusammenfassung der Erfindung

Der Erfindung liegt die Aufgabe zugrunde, Maßnahmen anzugeben, mit denen eine Vorrichtung zur Begrenzung der Eingriffstiefe eines Bohrers gebrauchsvorteilhaft weitergebildet werden.

Ein erster Aspekt betrifft ein lösbar mit dem Grundkörper verbundenes Anschlagelement, dass bezogen auf eine in der Drehebene des Bohrers liegende Achse gewendet werden kann. In einer Gebrauchsstellung weist eine Anschlagfläche insbesondere eines Anschlagrings des Anschlagelementes vom Grundkörper weg, sodass die Anschlagfläche zur Begrenzung der Bohrtiefe gegen das Werkstück treten kann. Nach einem Lösen des Anschlagelements vom Grundkörper kann das Anschlagelement in einem gewendeten Zustand wieder mit dem Grundkörper verbunden werden. Das Anschlagelement nimmt dann eine Parkstellung ein, in der die Anschlagfläche vom Werkstück wegweist. Die Anschlagfläche kann einem Anschlagring zugeordnet sein. Der Anschlagring besitzt einen Durchmesser und insbesondere einen Innendurchmesser, der größer ist, als ein Außendurchmesser des Grundkörpers, sodass ein Abschnitt des Grundkörpers in einem vom Anschlagelement ausgebildeten Raum, insbesondere in einer Höhlung, einliegt. Der Anschlagring kann mittels mehreren Stegen, insbesondere drei in gleichmäßiger Umfangsverteilung angeordneten Stegen mit dem Befestigungsring verbunden sein. Die im Querschnitt L-förmigen Stege begrenzen die Höhlung. Eine Außenwand des Grundkörpers kann dann einen radialen Abstand gegenüber einer Innenwand der Stege besitzen.

Ein zweiter Aspekt der Erfindung, der mit den technischen Merkmalen des ersten Aspektes kombinierbar ist, betrifft eine Vorrichtung, die mittels Klemmmittel an einem Schaft des Bohrers in verschiedenen Abständen zu einer Spitze des Bohrers befestigbar ist. Ein insbesondere spritzgegossenes Anschlagelement besitzt einen Befestigungsring, der in eine Ringnut des Grundkörpers eingreift. Das Anschlagelement kann vom Grundkörper getrennt werden. Hierzu muss der Befestigungsring aus der Ringnut entfernt werden. Um die Montage zu erleichtern und gleichzeitig sicherzustellen, dass das Anschlagelement nur gegen einen leichten Widerstand gegenüber dem Grundkörper gedreht werden kann, damit es beim Erreichen der Anschlagstellung, in der eine Anschlagfläche des Anschlagelementes gegen das Werkstück tritt, nicht weiter mit dem Grundkörper mitdreht, um Schleifspuren am Werkstück zu vermeiden, wird vorgeschlagen, dass der Befestigungsring eine Trennstelle aufweist. An dieser Trennstelle liegen sich zwei Enden des Befestigungsrings in einer Umfangsrichtung gegenüber. In einer entspannten Stellung des aus Kunststoff gefertigten Anschlagelementes können die beiden Enden sich berühren oder nur geringfügig voneinander beabstandet sein. In dieser Stellung soll der Außendurchmesser der Ringnut und insbesondere der Außendurchmesser eines Bodens der Ringnut kleiner sein, als der Innendurchmesser des Befestigungsrings und insbesondere eines in die Ringnut eingreifenden Wulstes des Befestigungsrings. Aufgrund dieser Maßnahme bildet sich ein radiales Bewegungsspiel zwischen Anschlagelement und Grundkörper aus. Das Anschlagelement wird bevorzugt im Spritzgussverfahren gefertigt. Die Spritzgussform ist so ausgelegt, dass sich bei der Fertigung zwei Enden ausbilden, die entweder nur geringfügig in Umfangsrichtung voneinander beabstandet sind oder die unter Ausbildung einer Sollbruchstelle miteinander verbunden sind. Hierzu erweist es sich als vorteilhaft, wenn der Befestigungsring im Bereich der Trennstelle einen verminderten Querschnitt aufweist. Es ist insbesondere von Vorteil, wenn zumindest eines der beiden Enden eine Spitze aufweist beziehungsweise sich kegelartig verjüngt. Es können sich zwei verjüngte Enden gegenüberliegen, die an ihrer Verbindungsstelle eine Sollbruchstelle ausbilden. Die Spritzgussform kann aber auch so ausgebildet sein, dass die beiden verjüngten Enden minimal voneinander beabstandet sind. Bei einer Variante der Erfindung ist vorgesehen, dass die Verjüngung oder die Spitze einer ebenen oder gewölbten und bevorzugt größeren Fläche gegenüberliegt. Mit einem so ausgestalteten Anschlagelement kann die Vorrichtung wie folgt zusammengesetzt werden. Der Grundkörper besitzt eine Konusfläche, an die sich die Ringnut anschließt. Die Ringnut kann im Bereich eines Zylinderabschnitts des Grundkörpers angeordnet sein. Das Anschlagelement wird über die Konusfläche montiert. Dabei gleitet eine Innenwand des Befestigungsrings, beispielsweise ein Wulst des Befestigungsrings, über die Konusfläche. Dies führt zu einer Aufweitung des Durchmessers des Befestigungsrings und zu einer Entfernung der beiden Enden des Befestigungsrings voneinander. Sind die beiden Enden des Befestigungsrings materialeinheitlich miteinander verbunden, so bricht der Befestigungsring an seiner Trennstelle, sodass die beiden Enden voneinander getrennt sind. Das Anschlagelement und insbesondere der Befestigungsring besitzt eine Elastizität, sodass sich der Befestigungsring gegen eine Rückstellkraft verformt. Beim Eintritt des Befestigungsrings beziehungsweise des Wulstes des Befestigungsrings in die Ringnut nähern sich die beiden Enden beim Entspannen des Anschlagelementes wieder an, bis sie in eine Annäherungsstellung oder eine Berührstellung treten. In diesen Stellungen ist der Innendurchmesser des Wulstes beziehungsweise des Befestigungsrings geringfügig größer als der Außendurchmesser des Grundes der Ringnut, sodass der Befestigungsring mit radialem beziehungsweise azimutalem Bewegungsspiel in der Ringnut einliegt. Die Trennstelle weist zwei Enden auf. Ein erstes Ende besitzt eine kleine Stirnfläche, die beispielsweise von der Spitze eines Kegels oder Kegelstumpfs gebildet ist. Das zweite Ende besitzt eine größere Fläche, die beispielsweise eine ebene Fläche oder eine gewölbte Fläche ist. An dieser Fläche kann sich das erste Ende abstützen. Bevorzugt erstreckt sich die zweite Fläche über die gesamte Querschnittsfläche des Befestigungsrings.

Ein dritter Aspekt der Erfindung, der mit den technischen Merkmalen des ersten und zweiten Aspektes kombinierbar ist, betrifft ein Federelement, das einen Klemmkörper beaufschlagt. Der Grundkörper der Vorrichtung weist eine Hohlkegelfläche auf, in der ein Klemmkörper steckt. Der Klemmkörper besitzt Spannflächen, die sich auf einer Kegelmantelfläche erstrecken. Durch einen axialen Druck bezogen auf die Erstreckungsrichtung des Bohrers können die Spannflächen des Klemmkörpers gegen die Gegenspannfläche der Hohlkegelfläche gedrückt werden. Zum Aufbringen des Drucks kann ein Spannelement vorgesehen sein. Das Spannelement kann eine Spannkappe sein, die mit einem Innengewinde auf ein Außengewinde des Grundkörpers aufgeschraubt ist. Ein Spannabschnitt des Spannelementes wirkt dann gegen einen Spannabschnitt des Klemmkörpers. Der Klemmkörper besitzt darüber hinaus eine Durchgangsbohrung, die eine Innenwand aufweist, die sich auf einer Kreiszylinderinnenfläche erstreckt. An dieser Innenwand kann der Schaft des Bohrers anliegen. Der Durchmesser der Durchgangsbohrung kann sich aufgrund der Elastizität des bevorzugt aus Kunststoff gefertigten Klemmelementes vermindern, sodass die beim Aufbringen des Drucks entstehenden radial einwärts gerichteten Kräfte die Innenwand an den Schaft des Bohrers andrücken. Der Grundkörper kann in einem frei wählbaren Abstand zur Spitze an den Schaft des Bohrers gefesselt werden. Das Klemmelement besitzt eine sich quer zur Achse erstreckende Stirnfläche, die der Spannfläche des Klemmkörpers gegenüberliegt. Diese Stirnfläche wird von einem Ende eines Federelementes beaufschlagt, das beim Spannen des Klemmkörpers gespannt wird. Das Federelement erzeugt eine Rückstellkraft, mit der der Klemmkörper beim Lösen des Spannelementes entgegen der Spannrichtung beaufschlagt wird, um die Klemmwirkung mit dem Schaft des Bohrers zu vermindern. Das Federelement, welches bevorzugt eine Wendelgangdruckfeder ist, liegt bevorzugt in einem Abschnitt, beispielsweise einem Zylinderabschnitt des Grundkörpers, der sich an die Hohlkegelfläche anschließt. Der Stirnfläche des Klemmkörpers liegt eine vom Grundkörper ausgebildete Stützfläche gegenüber, an der sich ein anderes Ende des Federelementes abstützt. Die Federkonstante des Federelementes ist bevorzugt so gewählt, dass es beim Lösen des Spannelementes den Klemmkörper aus der Klemmstellung in axialer Richtung verlagert. Bei dieser Verlagerung gleiten die Spannflächen des Klemmkörpers in Axialrichtung an der Hohlkegelfläche entlang.

Ein vierter Aspekt der Erfindung, der mit den technischen Merkmalen der drei zuvor beschriebenen Aspekte kombinierbar ist, betrifft eine Weiterbildung des Klemmkörpers, um Bohrer mit verschiedenen Durchmessern klemmen zu können. Hierzu besitzt der Klemmkörper eine im Querschnitt insgesamt C-förmige Gestalt. Die Durchgangsbohrung weist einen sich in Axialrichtung erstreckenden Abstandsfreiraum auf. Zwei in Umfangsrichtung voneinander beabstandete Ränder des Klemmkörpers begrenzen diesen Abstandsfreiraum. Die in Umfangsrichtung gemessene Weite des Abstandsfreiraums kann sich verändern, wenn der auf den Klemmkörper aufgebrachte Druck, mit dem der Klemmkörper innerhalb des Hohlkegelabschnittes verlagert wird, verändert wird. Einhergehend damit verändert sich und insbesondere verjüngt sich der Durchmesser der Durchgangsbohrung. Der Grundkörper besitzt eine sich an die Hohlkegelfläche anschließende Öffnung, durch die der Schaft des Bohrers hindurchragt. Das insbesondere als Spannkappe ausgebildete Spannelement besitzt eine dieser gegenüberliegenden Öffnung, durch die ebenfalls der Schaft des Bohrers hindurchragt. Die beiden Öffnungen besitzen einen Durchmesser, der größer ist, als der Durchmesser der Durchgangsbohrung des Klemmkörpers in einem entspannten Zustand des Klemmkörpers. Die beiden Öffnungen können denselben Durchmesser aufweisen. Dieser Durchmesser definiert den Durchmesser des größten zusammen mit der Vorrichtung verwendbaren Bohrers. Bohrer mit einem kleineren Durchmesser treten dann ausschließlich mit der Innenwand der Durchgangsbohrung des Klemmkörpers in Berührung. Sie durchragen die beiden Öffnungen des Grundkörpers beziehungsweise des Spannelementes frei. In einer Weiterbildung ist vorgesehen, dass die Spannflächen von in einer Umfangsrichtung um die Achse der Durchgangsbohrung von einem Zentralabschnitt des Klemmkörpers in Umfangsrichtung getrennt voneinander angeordneten, in Radialrichtung abragenden Flügeln gebildet sind. Es können beispielsweise drei, vier oder fünf Flügel vorgesehen sein, die jeweils voneinander um den gleichen Winkelbetrag voneinander beabstandet sind. Bevorzugt ist eine ungerade Anzahl von Flügeln, sodass ein Flügel dem Abstandsraum, der von einem Radialschlitz gebildet ist, gegenüberliegt. Die Flügel können sich in einer quer zur Achse bezogen auf die Durchgangsbohrung verlaufende Schnittebene in Radialrichtung nach radial außen verbreitern. Sie besitzen im Querschnitt somit eine Keilform. Zwei Flügel können jeweils an den Abstandsraum angrenzen. Der Abstandsraum erstreckt sich über die gesamte axiale Länge des Klemmkörpers. Es kann ferner vorgesehen sein, dass die Flügel jeweils in Achsrichtung bezogen auf die Durchgangsbohrung hintereinander angeordnete durch einen Freiraum voneinander getrennte Spannflächen ausbilden. Der Freiraum kann von einer in etwa in der Drehebene liegenden Fläche und von einer auf einer Zylindermantelfläche liegenden Fläche ausgebildet sein. Der Grundkörper kann darüber hinaus zwei parallel verlaufende ebene Flächen aufweisen, an denen ein Schraubenschlüssel angesetzt werden kann. Diese beiden Flächen können in der Konusfläche liegen. Es handelt sich dabei insbesondere um zwei sich bezogen auf die Achse der Vorrichtung gegenüberliegende Abflachungen.

### Kurze Beschreibung der Zeichnungen

Ein Ausführungsbeispiel der Erfindung wird nachfolgend anhand beigefügter Zeichnungen erläutert. Es zeigen:
- Fig. 1: eine Ansicht eines auf einen Bohrer 1 aufgesteckten Tiefenstopps mit einem Anschlagelement 4 in einer Gebrauchsstellung,
- Fig. 2: eine Darstellung gemäß Figur 1, jedoch in einer anderen Drehstellung,
- Fig. 3: eine Darstellung gemäß Figur 1, jedoch mit in eine Parkstellung gebrachtem Anschlagelement 4,
- Fig. 4: eine Darstellung gemäß Figur 3, jedoch in einer anderen Drehstellung,

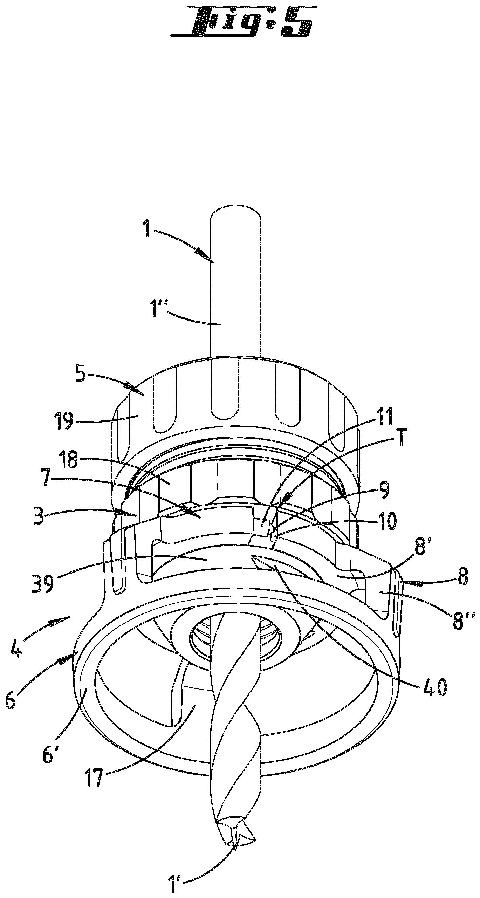

- Fig. 5: eine perspektivische Darstellung des Tiefenstopps in der Gebrauchsstellung,

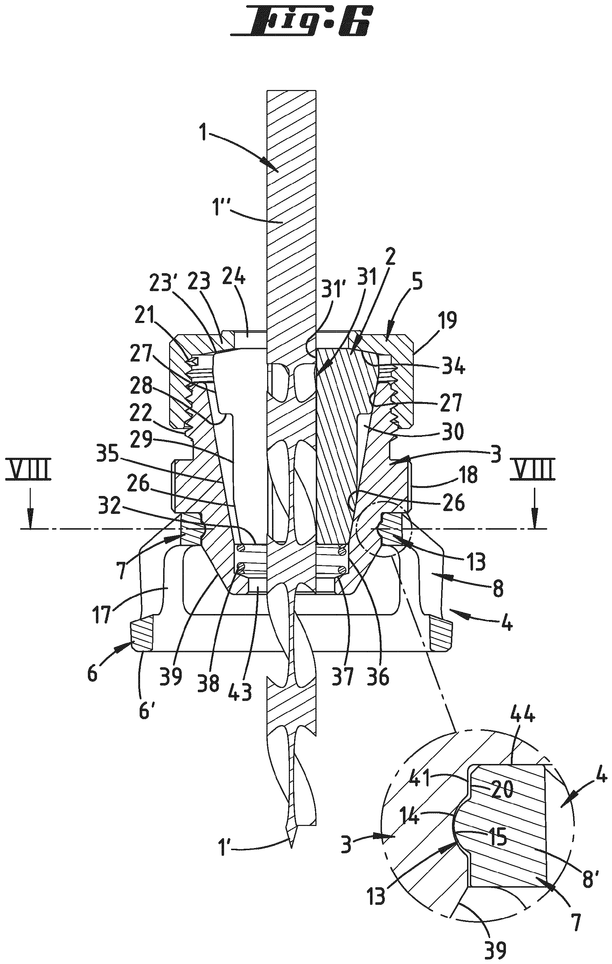

- Fig. 6: den Schnitt gemäß der Linie VI-VI in Figur 1,

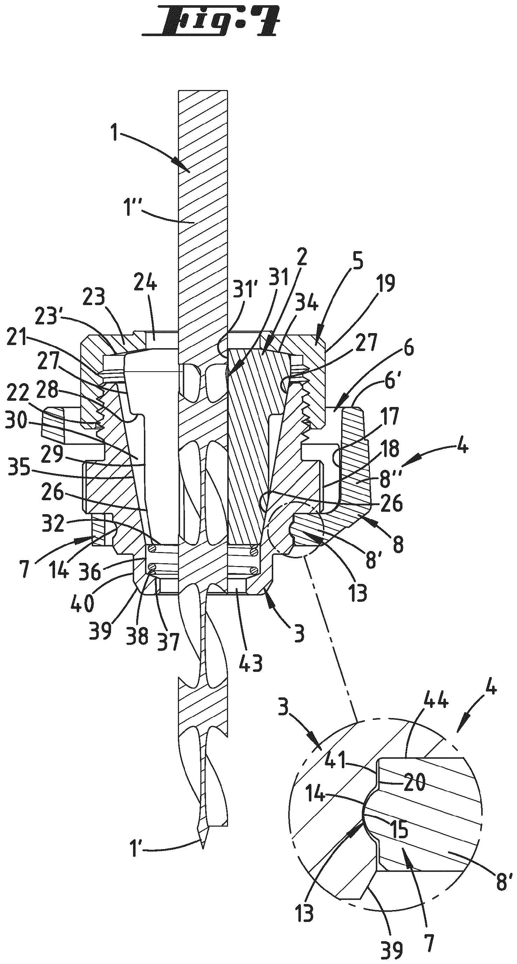

- Fig. 7: den Schnitt gemäß der Linie VII-VII in Figur 3,
- Fig. 8: den Schnitt gemäß der Linie VIII-VIII in Figur 6,
- Fig. 8a: vergrößert den Ausschnitt VIIIa in Figur 8,
- Fig. 8b: eine Darstellung gemäß Fig. 8a, jedoch mit geweitetem Befestigungsring 7,
- Fig. 8c: eine Darstellung gemäß Fig. 8b eines weiteren Ausführungsbeispiels,
- Fig. 8d: eine Darstellung gemäß Fig. 8a eines weiteren Ausführungsbeispiels,
- Fig. 9: perspektivisch einen Klemmkörper 2,

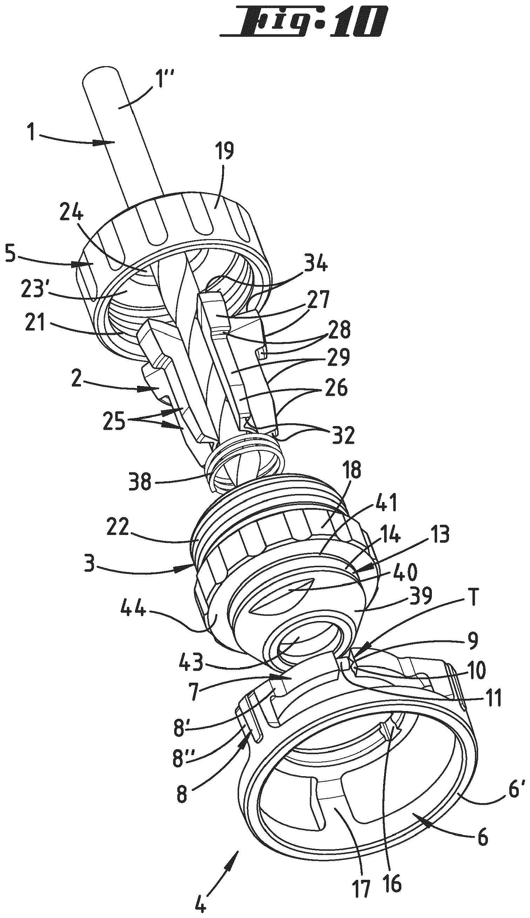

- Fig. 10: eine Explosionsdarstellung der Elemente der Vorrichtung.

### Beschreibung der Ausführungsformen

Das Ausführungsbeispiel ist ein Tiefenstopp, der auf den Schaft 1" eines Bohrers 1 aufgesteckt werden kann und der in einem frei wählbaren Abstand zur Spitze 1' am Schaft 1" gefesselt werden kann, damit die Eindringtiefe des Bohrers 1 in ein in den Zeichnungen nicht dargestelltes Werkstück begrenzt werden kann, auf den Bereich des sich an die Spitze 1' anschließenden Bereichs des Bohrers 1, der über eine Ebene hinausragt, die durch eine Anschlagfläche 6' eines Anschlagrings 6 eines Anschlagelementes 4 begrenzt ist.

Der Tiefenstopp besitzt einen Grundkörper 3, der aus Metall gefertigt sein kann. Der Grundkörper 3 besitzt eine zentrale Höhlung, die in beiden Richtungen bezogen auf eine Achse des Bohrers 1 offen ist. Eine zur Spitze 1' weisende Öffnung 43 wird von einem radial einwärts ragenden Kragen ausgebildet, der eine Stützfläche 37 ausbildet, an der sich ein Federelement 38 abstützen kann. Das Federelement 38 befindet sich in einem sich an die Öffnung 43 anschließenden Zylinderabschnitt 36.

An den Zylinderabschnitt 36 schließt sich eine Hohlkegelfläche 35 an, die sich in einer von der Öffnung 43 wegweisenden Richtung aufweitet bis in die gegenüberliegende Öffnung, die von einem Spannelement 5 abgedeckt ist.

Auf der Außenseite des die Öffnung 43 und den Zylinderabschnitt 36 ausbildenden Abschnittes des Grundkörpers 3 erstreckt sich eine Konusfläche 39, die sich in einer Richtung weg von der Spitze 1' des Bohrers 1 aufweitet.

In der Konusfläche 39 befinden sich zwei sich gegenüberliegende Abflachungen 40, die parallel zueinander verlaufende Flächen ausbilden, an denen ein Schraubwerkzeug, beispielsweise ein Schraubenschlüssel, angesetzt werden kann.

An die Konusfläche 39 schließt sich ein Zylinderabschnitt 41 an, in dem sich eine Ringnut 14 erstreckt. Die Ringnut 14 verläuft in Umfangsrichtung um den Grundkörper 3 und liegt in einer Drehebene bezogen auf den Bohrer 1.

An den Zylinderabschnitt 41 schließt sich eine Stufe 44 an, die sich in der Drehebene erstreckt. An die Stufe 44 schließt sich ein zylindrischer Abschnitt an, der eine geriffelte Außenwand 18 ausbildet, die den größten Durchmesser der Vorrichtung besitzen kann.

Der der Öffnung 43 gegenüber liegende Abschnitt der Hohlkegelfläche 35 beziehungsweise der an den Rand der Öffnung der Hohlkegelfläche 35 angrenzende äußere Abschnitt des Grundkörpers 3 trägt ein Außengewinde 22.

In der Höhlung des Grundkörpers 3 steckt ein Klemmkörper 2, der aus einem Kunststoff besteht und eine Elastizität aufweist. Ein zentraler Abschnitt 42 des Klemmkörpers 2 umgibt C-förmig eine Durchgangsbohrung 31, die eine sich im Wesentlichen auf einer Zylinderinnenfläche erstreckende Innenwand 31' aufweist.

Vom Zentralabschnitt 42 ragen mehrere, beim Ausführungsbeispiel fünf Flügel 25 in Radialrichtung ab. Die Flügel 25 erstrecken sich über die gesamte axiale Länge des Klemmkörpers 2. Die nach radial außen weisenden Flächen der Flügel 25 bilden Spannflächen 26, 27 aus, die sich auf einer Kegelstumpf-Mantelfläche erstrecken. Zwischen den beiden Spannflächen 26, 27, die jeweils bis zu den axialen Enden des Klemmkörpers 2 ragen, befindet sich jeweils ein Freiraum 30. Der Freiraum 30 wird von einer auf einer Zylindermantelfläche verlaufenden Flanke 29 und von einer sich in einer Drehebene erstreckenden zurückspringenden Flanke 28 begrenzt. Die beiden Spannflächen 26, 27 liegen in einer Flächenanlage an der Hohlkegelfläche 35. Die Innenwand 31' liegt in einer Flächenanlage an der Zylindermantelfläche des Schaftes 1".

Zwischen zwei Flügeln 25 erstreckt sich ein über die gesamte axiale Länge verlaufender Abstandsfreiraum 33, der dem Klemmkörper 2 seine im Querschnitt C-Form verleiht und der gewissermaßen einen Schlitz der Durchgangsbohrung 31 ausbildet. Bei einer Verminderung des Durchmessers der Durchgangsbohrung 31 vermindert sich die in Umfangsrichtung gemessene Weite des Abstandsraums 33.

Der Klemmkörper 2 besitzt zwei voneinander wegweisende Stirnflächen. Eine durchmesserkleine Stirnfläche 32 liegt der Stützfläche 37 gegenüber und wird von dem Federelement 38 in Richtung der großen Öffnung des Grundkörpers 3 beaufschlagt. Eine durchmessergroße Stirnfläche bildet Druckflanken 34 aus, die von Druckflanken 23' des Spannelementes 5 beaufschlagt werden.

Das Spannelement 5 besitzt einen zylinderförmigen Abschnitt und einen sich daran anschließenden im Wesentlichen in einer Ebene verlaufenden Abschnitt. Es hat die Form einer Spannkappe. Der zylinderförmige Abschnitt bildet ein Innengewinde 21 aus, das auf das Außengewinde 22 aufgeschraubt ist. Der ebene Abschnitt bildet einen Spannabschnitt 23 aus, in dem eine Öffnung 24 liegt. Der Spannabschnitt 23 bildet die Druckflanken 23' aus. Durch eine Drehung des Spannelementes 5 ändert sich der Abstand der Druckflanken 23' gegenüber dem Grundkörper 3, sodass der Klemmkörper 2 sich gegenüber dem Grundkörper 3 verlagert.

Wird das Spannelement 5 in einer ersten Drehrichtung, beispielsweise im Uhrzeigersinn, gedreht, so wird der Klemmkörper 2 in die die Hohlkegelfläche 35 ausbildende Höhlung des Grundkörpers 3 verlagert. Einhergehend damit gleiten die Spannflächen 26, 27 über die Hohlkegelfläche 35. Einhergehend damit vermindert sich der Durchmesser der Durchgangsbohrung 31 und wird das von einer Wendelgang-Druckfeder gebildete Federelement 38 gespannt.

Der Durchmesser der Durchgangsbohrung 31 vermindert sich so weit, bis die Innenwand 31' flächig am Schaft 1" des Bohrers 1 anliegt. Bei einem Weiterdrehen des Spannelementes 5 wird der Klemmkörper 2 derart komprimiert, dass auf den Schaft 1" eine Spannkraft aufgebracht wird, die die Vorrichtung reibschlüssig am Schaft 1" hält.

Wird das Spannelement 5 in einer zweiten Drehrichtung, beispielsweise gegen den Uhrzeigersinn, gedreht, so entfernt sich die Druckflanke 23' vom Grundkörper, sodass sich der Klemmkörper 2 entspannen kann. Sobald sich die Druckflanke 23' des Spannelementes 5 von der ihr gegenüberliegenden Druckflanke 34 des Klemmkörpers 2 löst, kann sich das Federelement 38 entspannen, um den Klemmkörper 2 aus der Höhlung des Grundkörpers 3 heraus zu treiben. Einhergehend damit löst sich die Innenwand 31' vom Schaft 1", sodass der Bohrer 1 gegenüber der Vorrichtung verlagert werden kann.

Aus den Figuren ist ersichtlich, dass der Durchmesser der im Querschnitt kreisförmigen Öffnungen 24, 43 größer ist, als der Durchmesser des Bohrers 1 beziehungsweise der Durchmesser der Durchgangsbohrung 31 in einem entspannten Zustand. Der Schaft 1" des Bohrers 1 durchgreift somit berührungsfrei die Öffnungen 24, 43 und wird ausschließlich durch eine reibschlüssige Anlage an der Innenwand 31' an der Vorrichtung gehalten.

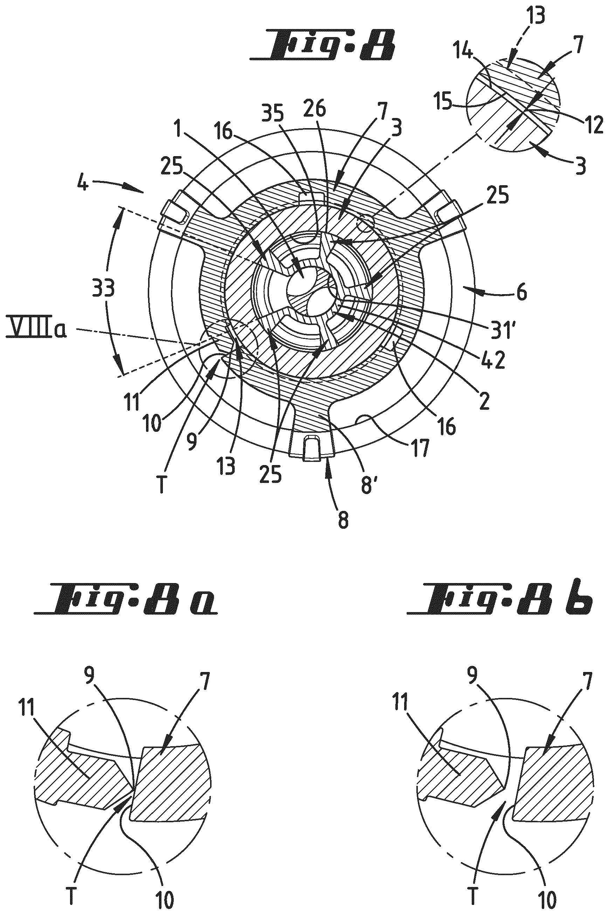

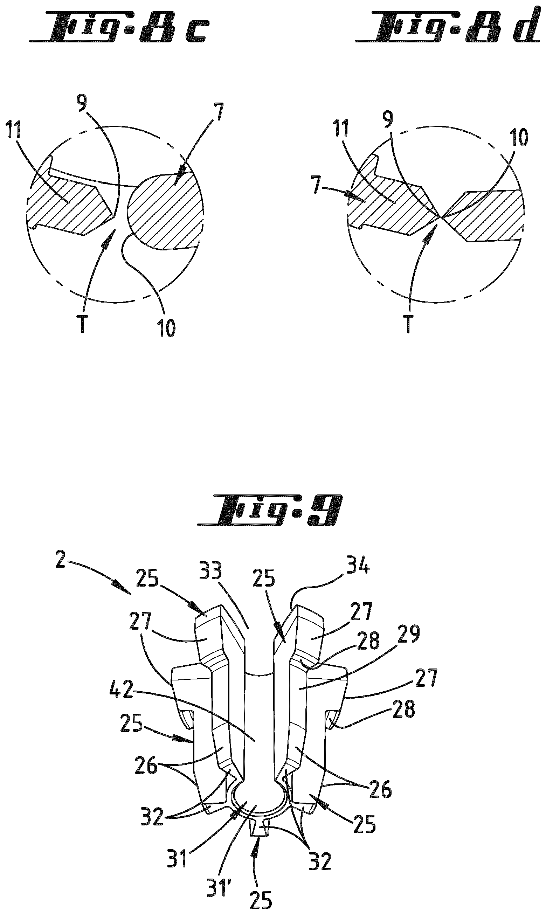

Ein Anschlagelement 4 besteht aus Kunststoff und besitzt einen Befestigungsring 7, der einen radial einwärts weisenden Wulst 15 aufweist, der in der Ringnut 14 einliegt. Zwischen Wulst 15 und Ringnut 13 beziehungsweise Boden 14 der Ringnut 13 erstreckt sich ein geringer Spalt 12, der dem Anschlagelement 4 gegenüber dem Grundkörper 3 ein Bewegungsspiel in Umfangsrichtung verleiht (siehe vergrößerter Ausschnitt der Figur 8). Aufgrund dieses geringen radialen beziehungsweise axialen Spaltes 12 kann sich das Anschlagelement 4 mit geringer Reibung gegenüber dem Grundkörper 3 drehen.

Der Befestigungsring 7 ist mit einem axial vom Befestigungsring 7 beabstandeten Anschlagring 6, der die Anschlagfläche 6' bildet, verbunden. Die Verbindung des Anschlagsrings 6 mit dem Befestigungsring 7 erfolgt mit Stegen 8. Die Stege 8 bilden jeweils einen ersten Stegabschnitt 8' aus, der im Wesentlichen in der Drehebene verläuft und einen zweiten Stegabschnitt 8", der im Wesentlichen in Achsrichtung verläuft. Es sind drei in gleichmäßiger Umfangsverteilung angeordnete Stege vorgesehen. Andere Ausführungsbeispiele besitzen eine größere Anzahl von Stegen.

Der Innendurchmesser einer Innenwand 17 des Anschlagrings 6 hat einen Durchmesser, der größer ist, als der Durchmesser der Außenwand 18 des Grundkörpers 3. Die Innenwände 17 der Stege 8 begrenzen einen Hohlraum des Anschlagelementes 4.

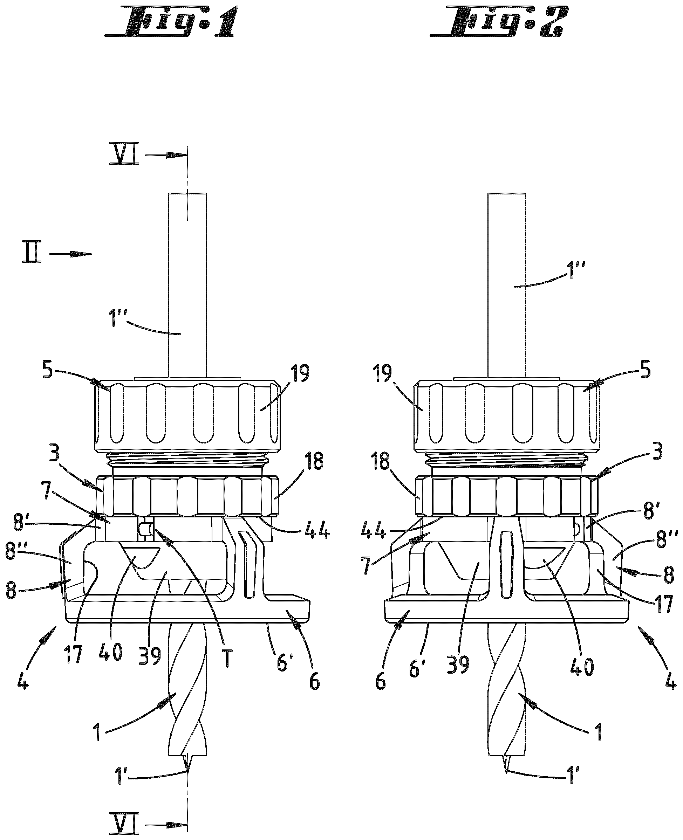

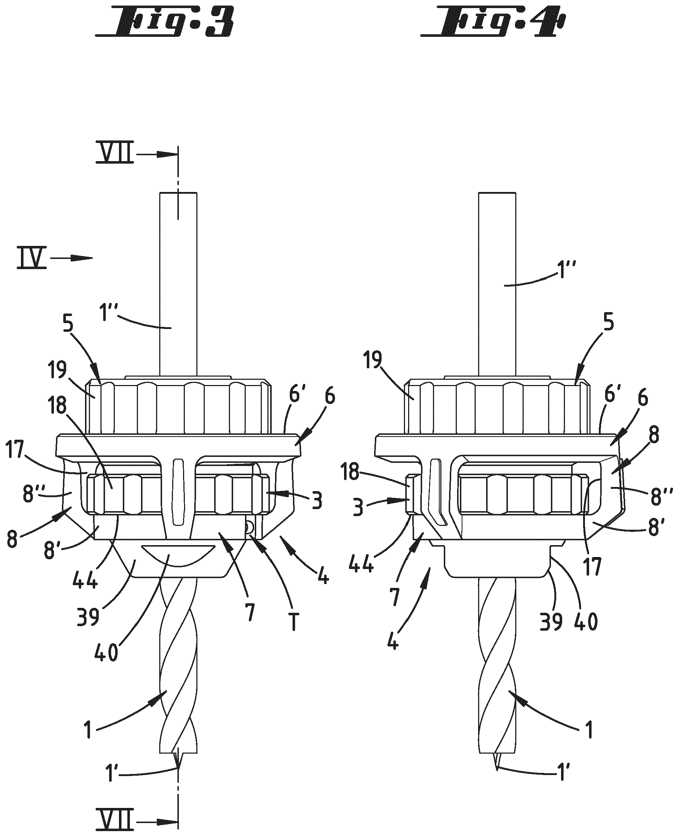

Das Anschlagelement 4 kann von einer in den Figuren 1 und 2 dargestellten Gebrauchsstellung, in der die Anschlagfläche 6' zur Spitze 1' des Bohrers 1 weist, und in der die Anschlagfläche 6' zwischen Spitze 1' und spitzenseitiger Stirnfläche des Grundkörpers 3 liegt, in eine in den Figuren 3 und 4 dargestellte Parkstellung gebracht werden, in der die Anschlagfläche 6' von der Spitze' des Bohrers 1 wegweist. In der Parkstellung befindet sich der zur Spitze 1' weisende Abschnitt des Grundkörpers 3 in dem vom Anschlagelement 4 ausgebildeten Hohlraum. Der Durchmesser des Hohlraums ist insbesondere größer, als der größte Durchmesser des Grundkörpers 3, sodass ein Abschnitt des Grundkörpers 3, der den größten Durchmesser des Grundkörpers 3 aufweist, in diesem Hohlraum liegt, der insbesondere von den Stegen 8 begrenzt ist.

Das Anschlagelement 4 ist ein Spritzgusselement aus Kunststoff. Die Spritzgussform zur Fertigung des Anschlagelementes 4 ist derart ausgebildet, dass sich eine Trennstelle T im Befestigungsring 7 ausbildet. An der Trennstelle besitzt der Befestigungsring 7 zwei in Umfangsrichtung zueinander weisende Enden 9, 10, die geringfügig voneinander beabstandet sein können. Hierzu ist vorgesehen, dass zumindest ein Ende 9 spitz auf das andere Ende 10 zuläuft. Beim Ausführungsbeispiel ist dieses Ende 9 als Spitze ausgebildet, die zu einer ebenen Fläche des anderen Endes 10 weist (siehe Figuren 8a und 8b). Das andere Ende kann aber auch als Spitze ausgebildet sein oder als Rundung. Die Figur 8c zeigt eine Variante, bei der der Spitze 9 eine gewölbte Fläche 10 gegenüberliegt. Die Figur 8d zeigt ein Ausführungsbeispiel, bei dem zwei Spitzen 9, 10 aneinanderstoßen. Vorteilhaft ist, dass die Trennstelle von einem querschnittsverminderten Bereich des Befestigungsrings 7 ausgebildet ist. Beim Ausführungsbeispiel schließt sich die Spitze 9, die kegelförmig verlaufen kann, an einen Zapfen 11, der die Form eines Kreiszylinders haben kann, an. Die Querschnittsfläche des Zapfens 11 ist geringer, als die Querschnittsfläche des Befestigungsrings im Bereich seines anderen Umfangs.

Die Figuren 8a und 8d zeigen die Trennstelle T im entspannten Zustand des Befestigungsrings 7, in dem der Wulst 15 in der Ringnut 13 einliegt. Die beiden Enden 9, 10 berühren sich. Die Figuren 8b und 8c zeigen die Trennstelle T in einer aufgeweiteten Stellung, beispielsweise wenn der Befestigungsring 9 bei seiner Montage oder Demontage über die Konusfläche 39 geschoben wird.

Es wird als vorteilhaft angesehen, wenn das Ende 9 eine geringe Stirnfläche aufweist und das Ende 10 eine große Stirnfläche aufweist, sodass ein eventueller seitlicher Versatz nicht dazu führt, dass die beiden Enden 9, 10 sich gegeneinander verschieben, wie dies in einer nicht bevorzugten Weise bei einem Ausführungsbeispiel gemäß Figur 8d erfolgen kann.

Auf der Innenseite des Befestigungsrings 7 sind darüber hinaus Ausnehmungen 16 vorgesehen.

Das Anschlagelement 4 kann derart gefertigt werden, dass die beiden Enden 9, 10 unter Ausbildung einer geringen Materialbrücke miteinander verbunden sind. Es ist aber auch möglich, die Spritzgussform so auszubilden, dass die Enden 9, 10 nur geringfügig voneinander beabstandet sind. Die beiden Enden 9, 10 können sich berühren. In jedem Falle ist vorgesehen, dass der Durchmesser eines Wulstes 15 der Innenseite des Befestigungsrings 7 größer ist, als der Durchmesser des Nutbodens 14 der Ringnut 13, damit das Anschlagelement 4 im montierten Zustand ein Bewegungsspiel besitzt.

Sind die beiden Enden 9, 10 materialeinheitlich miteinander verbunden, so werden sie bei der erstmaligen Verbindung des Anschlagelement des 4 mit dem Grundkörper 3 voneinander getrennt. Der Befestigungsring 7 wird hierzu über die Konusfläche 39 geschoben. Einhergehend damit bricht die Verbindung der beiden Enden 9, 10 an der Trennstelle auf, sodass sich die beiden Enden 9, 10 voneinander entfernen können. Dies geht mit einer Vergrößerung des Durchmessers des Befestigungsrings 7 einher, bis der von einem Zylinderabschnitt 20 des Befestigungsrings 7 abragende ringförmige Wulst 15 in die Ringnut 13 eingreift.

Es ist von besonderem Vorteil, wenn die beiden Enden 9, 10 berührend aneinander anliegen, wenn der Wulst 15 in der Ringnut 13 einliegt. Der Befestigungsring 7 wird dadurch auf einem definierten Durchmesser gehalten, der größer ist, als der Durchmesser des Nutbodens 14 der Ringnut 13.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Eine Vorrichtung, die dadurch gekennzeichnet ist, dass der Innendurchmesser des Befestigungsrings 7 derart größer ist als der Außendurchmesser der Ringnut 13, dass das Anschlagelement 4 mit radialem Bewegungsspiel gegenüber dem Grundkörper 3 drehbar ist und der Befestigungsring 7 eine Trennstelle T aufweist, an der sich zwei Enden 9, 10 des Befestigungsrings 7 in Umfangsrichtung gegenüberliegen und an der der Querschnitt des Befestigungsring 7 vermindert ist.

Eine Vorrichtung, die dadurch gekennzeichnet ist, dass eines der Enden 9, 10 eine Verjüngung oder Spitze 9 und/oder eine ebene oder gewölbte Fläche 10 ausbildet oder dass die beiden Enden 9, 10 voneinander verschieden große Stirnflächen aufweisen.

Eine Vorrichtung, die dadurch gekennzeichnet ist, dass die Verjüngung oder Spitze 9 der ebenen oder gewölbten Fläche 10 gegenüberliegt.

Eine Vorrichtung, die dadurch gekennzeichnet ist, dass die Trennstelle T eine Sollbruchstelle ist.

Eine Vorrichtung, die dadurch gekennzeichnet ist, dass das Anschlagselement 4 durch Lösen vom Grundkörper 3, Wenden um 180° und Wiederbefestigen am Grundkörper 3 in eine Parkstellung bringbar ist, in der die Anschlagfläche 6' vom Werkstück wegweist.

Eine Vorrichtung, die dadurch gekennzeichnet ist, dass sich an die Ringnut 13 eine Konusfläche 39 anschließt, über die der Befestigungsring 7 zur Montage des Anschlagelementes 4 schiebbar ist, wobei sich bei der Montage der Innendurchmesser des Befestigungsrings 7 vergrößert.

Eine Vorrichtung, die dadurch gekennzeichnet ist, dass ein die Anschlagfläche 6' ausbildender Anschlagring 6 mittels Stegen 8 mit dem Befestigungsring 7 verbunden ist, wobei die Stege 8 einen Raum begrenzen, in dem sich in der Parkstellung ein Abschnitt des Grundkörpers 3 befindet, dessen Durchmesser größer ist, als der Durchmesser eines Zylinderabschnitts 41, in dem die Ringnut 13 verläuft.

Eine Vorrichtung, die gekennzeichnet ist durch ein im Abschnitt 36 angeordnetes, vorgespanntes und zwischen der Stirnfläche 32 und einer den Abschnitt 36 begrenzenden Stützfläche 37 anliegendes Federelement 38, welches den Klemmkörper 2 entgegen der Spannrichtung beaufschlagt.

Eine Vorrichtung, die dadurch gekennzeichnet ist, dass die Spannflächen 26, 27 von in einer Umfangsrichtung um die Achse der Durchgangsbohrung 31 von einem Zentralabschnitt 42 des Klemmkörpers 2 getrennt voneinander in Radialrichtung abragenden Flügeln 25 ausgebildet sind.

Eine Vorrichtung, die dadurch gekennzeichnet ist, dass die Innenwand 31' einen sich in Axialrichtung erstreckenden Abstandsfreiraum 33 aufweist, dessen in Umfangsrichtung gemessene Weite sich einhergehend mit einer Verminderung des Durchmessers der Durchgangsbohrung 31 bei einer Verlagerung des Klemmkörpers 2 in Richtung der Spannrichtung verkleinert, und der Durchmesser der sich gegenüberliegenden Öffnungen 24, 43 größer ist, als der Durchmesser der axial geschlitzten Durchgangsbohrung 31 in einem entspannten Zustand des Klemmkörpers 2.

Eine Vorrichtung, die dadurch gekennzeichnet ist, dass die Spannflächen 26, 27 von in Umfangsrichtung um die Achse der Durchgangsbohrung 31 von einem Zentralabschnitt 42 des Klemmkörpers in Umfangsrichtung getrennt voneinander angeordneten, in Radialrichtung abragenden Flügeln 25 ausgebildet sind.

Eine Vorrichtung, die dadurch gekennzeichnet ist, dass die Flügel 25 jeweils in Achsrichtung bezogen auf die Durchgangsbohrung 31 hintereinander angeordnete und durch einen Freiraum 30 voneinander getrennte Spannflächen 26, 27 ausbilden.

Eine Vorrichtung, die dadurch gekennzeichnet ist, dass der Klemmkörper 2 eine Druckflanke 34 aufweist, die von einer Druckflanke 23' des als Schraubkappe ausgebildeten Spannelementes 5 beaufschlagt wird, das mit einem Innengewinde 21 auf ein Außengewinde 22 des Grundkörpers 3 aufgeschraubt ist.

Eine Vorrichtung, die dadurch gekennzeichnet ist, dass eine ansonsten rotationssymmetrische Oberfläche 39 des Grundkörpers 3 parallel zueinander verlaufende Abflachungen 40 zum Angriff eines Schraubwerkzeuges aufweist.

Eine Vorrichtung, die dadurch gekennzeichnet ist, dass die Flügel 25 des Klemmkörpers 2 sich in einer quer zur Achse bezogen auf die Durchgangsbohrung 31 verlaufende Schnittebene in Radialrichtung nach radial außen verbreitern und/oder dass sich der über die gesamte axiale Länge des Klemmkörpers 2 erstreckende Abstandsraum 33) zwischen zwei Flügeln 25 erstreckt und/oder dass dem Abstandsraum 33 ein Flügel 25 gegenüberliegt.

Ein Verfahren, das dadurch gekennzeichnet ist, dass der Befestigungsring 7 über eine Konusfläche 39 des Grundkörpers 3 geschoben wird, wobei sich die beiden Enden 9, 10 gegen eine elastische Rückstellkraft voneinander entfernen und nach dem Eintritt eines Wulstes 15 des Befestigungsrings 7 in die Ringnut 13 elastisch aufeinander zu bewegen und in einer entspannten Annäherungs- oder Berührungsstellung den Innendurchmesser des Befestigungsrings 7 auf einen Wert begrenzen, der größer ist, als der Außendurchmesser der Ringnut 13, sodass das Anschlagelement 4 mit radialem Bewegungsspiel gegenüber dem Grundkörper drehbar ist.

Ein Verfahren, das dadurch gekennzeichnet ist, dass die Trennstelle T eine Sollbruchstelle ausbildet, an der die beiden Enden 9, 10 materialeinheitlich miteinander verbunden sind, die bei der Montage des Anschlagelementes 4 bricht.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

### Liste der Bezugszeichen

| | | | |
|---|---|---|---|
| 1 | Bohrer | 23 | Spannabschnitt |
| 1' | Spitze | 23' | Druckflanke |
| 1" | Schaft | 24 | Öffnung |
| 2 | Klemmkörper | 25 | Flügel |
| 3 | Grundkörper | 26 | Spannfläche |
| 4 | Anschlagelement | 27 | Spannfläche |
| 5 | Spannelement | 28 | zurückspringende Flanke |
| 6 | Anschlagring | 29 | Flanke |
| 6' | Anschlagfläche | 30 | Freiraum |
| 7 | Befestigungsring | 31 | Durchgangsbohrung |
| 8 | Steg | 31' | Innenwand |
| 8' | erster Stegabschnitt | 32 | Stirnfläche |
| 8" | zweiter Stegabschnitt | 33 | Abstandsraum |
| 9 | Spitze | 34 | Druckflanke |
| 10 | flaches Ende | 35 | Hohlkegelfläche |
| 11 | Zapfen | 36 | Zylinderabschnitt |
| 12 | Spalt | 37 | Stützfläche |
| 13 | Ringnut | 38 | Federelement |
| 14 | Nutboden | 39 | Konusfläche |
| 15 | Wulst | 40 | Abflachung |
| 16 | Ausnehmung | 41 | Zylinderabschnitt |
| 17 | Innenwand | 42 | Zentralabschnitt |
| 18 | Außenwand | 43 | Öffnung |
| 19 | Außenwand | 44 | Stufe |
| 20 | Zylinderabschnitt | | |
| 21 | Innengewinde | T | Trennstelle |
| 22 | Außengewinde | | |

## Patentansprüche

1. Vorrichtung zur Begrenzung der Eingriffstiefe eines Bohrers in ein Werkstück, mit einem Grundkörper (3), der mittels Klemmmitteln (2, 5) an einem Schaft (1") des Bohrers (1) in verschiedenen Abständen zu einer Spitze (1') des Bohrers (1) befestigbar ist und mit einem Anschlagelement (4), das mit einem in eine Ringnut (13) des Grundkörpers (3) eingreifenden Befestigungsring (7) drehbar und lösbar in einer Gebrauchsstellung am Grundkörper (3) befestigt ist, in der eine Anschlagfläche (6') in Richtung auf das Werkstück weist, **dadurch gekennzeichnet, dass** das Anschlagselement (4) durch Lösen vom Grundkörper (3), Wenden um 180° und Wiederbefestigen am Grundkörper (3) in eine Parkstellung bringbar ist, in der die Anschlagfläche (6') vom Werkstück wegweist.

2. Vorrichtung nach einem der vorhergehenden Ansprüche, **dadurch gekennzeichnet, dass** sich an die Ringnut (13) eine Konusfläche (39) anschließt, über die der Befestigungsring (7) zur Montage des Anschlagelementes (4) schiebbar ist, wobei sich bei der Montage der Innendurchmesser des Befestigungsrings (7) vergrößert.

3. Vorrichtung nach einem der vorhergehenden Ansprüche, **dadurch gekennzeichnet, dass** ein die Anschlagfläche (6') ausbildender Anschlagring (6) mittels Stegen (8) mit dem Befestigungsring (7) verbunden ist, wobei die Stege (8) einen Raum begrenzen, in dem sich in der Parkstellung ein Abschnitt des Grundkörpers (3) befindet, dessen Durchmesser größer ist, als der Durchmesser eines Zylinderabschnitts (41), in dem die Ringnut (13) verläuft.

4. Vorrichtung zur Begrenzung der Eingriffstiefe eines Bohrers in ein Werkstück, mit einem Grundkörper (3), der mittels Klemmmitteln (2, 5) an einem Schaft (1") des Bohrers (1) in verschiedenen Abständen zu einer Spitze (1') des Bohrers (1) befestigbar ist und mit einem Anschlagelement (4), das mit einem in eine Ringnut (13) des Grundkörpers (3) eingreifenden Befestigungsring (7) drehbar und lösbar am Grundkörper (3) befestigt ist und eine Anschlagfläche (6') aufweist zum Anschlagen an das Werkstück, **dadurch gekennzeichnet, dass** der Innendurchmesser des Befestigungsrings (7) derart größer ist als der Außendurchmesser der Ringnut (13), dass das Anschlagelement (4) mit radialem Bewegungsspiel gegenüber dem Grundkörper (3) drehbar ist und der Befestigungsring (7) eine Trennstelle (T) aufweist, an der sich zwei Enden (9,10) des Befestigungsrings (7) in Umfangsrichtung gegenüberliegen und an der der Querschnitt des Befestigungsring (7) vermindert ist.

5. Vorrichtung nach Anspruch 4, **dadurch gekennzeichnet, dass** eines der Enden (9, 10) eine Verjüngung oder Spitze (9) und/oder eine ebene oder gewölbte Fläche (10) ausbildet oder dass die beiden Enden (9, 10) voneinander verschieden große Stirnflächen aufweisen.

6. Vorrichtung nach Anspruch 5, **dadurch gekennzeichnet, dass** die Verjüngung oder Spitze (9) der ebenen oder gewölbten Fläche (10) gegenüberliegt.

7. Vorrichtung nach einem der vorhergehenden Ansprüche, **dadurch gekennzeichnet, dass** die Trennstelle (T) eine Sollbruchstelle ist.

8. Vorrichtung zur Begrenzung der Eingriffstiefe eines Bohrers in ein Werkstück, mit einem Grundkörper (3), der an einem Schaft (1") des Bohrers (1) in verschiedenen Abständen zu einer Spitze (1') des Bohrers (1) befestigbar ist und mit einer Anschlagfläche (6') zum Anschlagen an das Werkstück, wobei der Grundkörper (3) eine Hohlkegelfläche (35) aufweist, in der ein eine Stirnfläche (32) aufweisender Klemmkörper (2) steckt, der an der Hohlkegelfläche (35) anliegende Spannflächen (26, 27) und eine Durchgangsbohrung (31) mit einer am Schaft (1') anliegenden Innenwand (31') aufweist, mit einem Spannelement (5) zum Aufbringen eines in Achsrichtung bezogen auf die Drehachse des Bohrers (1) in einer Spannrichtung gerichteten Drucks auf das Klemmelement (2), um die Innenwand (31') gegen den Schaft (1") und die Spannflächen (26, 27) gegen die Hohlkegelfläche (35) zu beaufschlagen und dadurch die Vorrichtung an den Schaft (1') zu fesseln, wobei sich an die Hohlkegelfläche (35) ein Abschnitt (36) anschließt, **gekennzeichnet durch** ein im Abschnitt (36) angeordnetes, vorgespanntes und zwischen der Stirnfläche (32) und einer den Abschnitt (36) begrenzenden Stützfläche (37) anliegendes Federelement (38), welches den Klemmkörper (2) entgegen der Spannrichtung beaufschlagt.

9. Vorrichtung nach einem der vorhergehenden Ansprüche, **dadurch gekennzeichnet, dass** die Spannflächen (26, 27) von in einer Umfangsrichtung um die Achse der Durchgangsbohrung (31) von einem Zentralabschnitt (42) des Klemmkörpers (2) getrennt voneinander in Radialrichtung abragenden Flügeln (25) ausgebildet sind.

10. Vorrichtung zur Begrenzung der Eingriffstiefe eines Bohrers in ein Werkstück mit einem Grundkörper (3), der an einem Schaft (1") des Bohrers (1) in verschiedenen Abständen zu einer Spitze (1') des Bohrers (1) befestigbar ist und mit einer Anschlagfläche (6') zum Anschlagen an das Werkstück, wobei der Grundkörper (3) eine Hohlkegelfläche (35) aufweist, in der ein elastisch verformbarer Klemmkörper (2) steckt, der an der Hohlkegelfläche (35) anliegende Spannflächen (26, 27) und eine Durchgangsbohrung (31) mit einer am Schaft (1') anliegenden Innenwand (31') aufweist, mit einem eine Öffnung (24), durch die der Schaft (1") hindurchragt, aufweisendes Spannelement (5) zum Aufbringen eines in Achsrichtung bezogen auf die Drehachse des Bohrers (1) in einer Spannrichtung gerichteten Drucks auf das Klemmelement (2), um die Innenwand (31') gegen den Schaft (1") und die Spannflächen (26, 27) gegen die Hohlkegelfläche (35) zu beaufschlagen und dadurch die Vorrichtung an den Schaft (1') zu fesseln, wobei der Öffnung (24) eine Öffnung (43) gegenüberliegt, durch die der Schaft (1") hindurchragt, wobei die Spannflächen (26, 27) von in Umfangsrichtung um die Achse der Durchgangsbohrung (31) von einem Zentralabschnitt (42) des Klemmkörpers in Umfangsrichtung getrennt voneinander angeordneten, in Radialrichtung abragenden Flügeln (25) ausgebildet sind, **dadurch gekennzeichnet, dass** die Flügel (25) jeweils in Achsrichtung bezogen auf die Durchgangsbohrung (31) hintereinander angeordnete und durch einen Freiraum (30) voneinander getrennte Spannflächen (26, 27) ausbilden.

11. Vorrichtung nach einem der vorhergehenden Ansprüche, **dadurch gekennzeichnet, dass** der Klemmkörper (2) eine Druckflanke (34) aufweist, die von einer Druckflanke (23') des als Schraubkappe ausgebildeten Spannelementes (5) beaufschlagt wird, das mit einem Innengewinde (21) auf ein Außengewinde (22) des Grundkörpers (3) aufgeschraubt ist.

12. Vorrichtung nach einem der vorhergehenden Ansprüche, **dadurch gekennzeichnet, dass** eine ansonsten rotationssymmetrische Oberfläche (39) des Grundkörpers (3) parallel zueinander verlaufende Abflachungen (40) zum Angriff eines Schraubwerkzeuges aufweist.

13. Vorrichtung nach einem der vorhergehenden Ansprüche, **dadurch gekennzeichnet, dass** die Flügel (25) des Klemmkörpers (2) sich in einer quer zur Achse bezogen auf die Durchgangsbohrung (31) verlaufende Schnittebene in Radialrichtung nach radial außen verbreitern und/oder dass sich der über die gesamte axiale Länge des Klemmkörpers (2) erstreckende Abstandsraum (33) zwischen zwei Flügeln (25) erstreckt und/ oder dass dem Abstandsraum (33) ein Flügel (25) gegenüberliegt.

14. Verfahren zur Fertigung einer Vorrichtung gemäß einem der vorhergehenden Ansprüche, wobei ein Grundkörper (3) mit einer Ringnut (13) und Klemmmittel (2, 5) bereitgestellt werden, mit denen ein Schaft (1") eines Bohrers (1) in verschiedenen Abständen zu einer Spitze (1') des Bohrers (1) am Grundkörper (3) befestigbar ist und im Spritzgussverfahren ein Anschlagelement (4) aus Kunststoff gefertigt wird, bei dem zwei an einer Trennstelle (T) in einem Befestigungsring (7) sich gegenüberliegende Enden (9, 10) materialeinheitlich miteinander befestigt oder nur geringfügig voneinander beabstandet sind, **dadurch gekennzeichnet, dass** der Befestigungsring (7) über eine Konusfläche (39) des Grundkörpers (3) geschoben wird, wobei sich die beiden Enden (9, 10) gegen eine elastische Rückstellkraft voneinander entfernen und nach dem Eintritt eines Wulstes (15) des Befestigungsrings (7) in die Ringnut (13) elastisch aufeinander zu bewegen und in einer entspannten Annäherungs- oder Berührungsstellung den Innendurchmesser des Befestigungsrings (7) auf einen Wert begrenzen, der größer ist, als der Außendurchmesser der Ringnut (13), sodass das Anschlagelement (4) mit radialem Bewegungsspiel gegenüber dem Grundkörper drehbar ist und/oder dass die Trennstelle (T) eine Sollbruchstelle ausbildet, an der die beiden Enden (9, 10) materialeinheitlich miteinander verbunden sind, die bei der Montage des Anschlagelementes (4) bricht.

15. Vorrichtung oder Verfahren, **gekennzeichnet durch** eines oder mehrere der kennzeichnenden Merkmale eines der vorhergehenden Ansprüche.
